# EUROPÄISCHE PATENTSCHRIFT

(11) **EP 0 714 014 B1**
(45) Veröffentlichungstag und Bekanntmachung des Hinweises auf die Patenterteilung: **27.01.1999**
(21) Anmeldenummer: 95117501.7
(22) Anmeldetag: 07.11.1995
(51) Int. Cl.: G01C 9/28

(54) **Wasserwaage**
Spirit level
Niveau à bulle

(30) Priorität: 23.11.1994 DE 4441657
(43) Veröffentlichungstag der Anmeldung: 29.05.1996
(73) Patentinhaber: Stabila-Messgeräte Gustav Ullrich GmbH & Co.KG, D-76855 Annweiler am Trifels (DE)
(72) Erfinder: Beck, Klaus, Dipl.-Ing. (FH), D-73441 Bopfingen (DE)
(74) Vertreter: Patentanwälte Möll und Bitterich

(56) Entgegenhaltungen:
- EP-A- 0 070 476
- EP-A- 0 281 933
- DE-A- 3 532 123

## Beschreibung

Die Erfindung betrifft Wasserwaagen mit einem geschlossenen, toleranzbehafteten Hohlprofil gemäß dem Oberbegriff des Anspruchs 1.

Wasserwaagen werden weltweit in großen Stückzahlen jährlich verkauft. Sie bestehen im wesentlichen aus einem langgestreckten parallelepipedischen Hohlprofil, meist aus Aluminium, dessen offene Enden durch elastische, stoßabsorbierende Endkappen verschlossen sein können. Üblicherweise sind zwei oder mehr Sichtfenster vorgesehen, die jeweils den Blick auf eine Horizontal- bzw. Vertikal-Libelle freigeben. Die Libellen sind zur Meßsohle der Wasserwaage exakt justiert. Diese Justierung soll auch beim rauhen Betrieb auf Baustellen usw. für eine möglichst lange Zeit erhalten bleiben. Aus diesem Grunde werden der Konstruktion der entsprechenden Haltevorrichtungen und ihrer Montage viel Zeit und Aufmerksamkeit gewidmet.

Der glasklare Libellenkörper wird mit Hilfe eines Libellenhalters aus Kunststoff im Hohlprofil befestigt. Gemäß der DE-PS 22 54 456 erfolgt die Befestigung mit Hilfe eines schwindungsfrei aushärtenden Klebers. Diese Befestigung ist sowohl für Horizontal- als auch für Vertikal-Libellen geeignet und hat sich in den letzten Jahrzehnten sehr bewährt. Sie ist jedoch zeitaufwendig und teuer. Die Wasserwaagen müssen während des Aushärtens des Klebers durch besondere Vorkehrungen gesichert werden, damit die justierte Libelle sich nicht verstellt.

Eine kombinierte Schraub- und Klebemontage des Libellenhalters einer Horizontal-Libelle zeigt die DE-PS 23 51 194.

Eine Klemmbefestigung des Libellenhalters für Horizontal-Libellen im Hohlprofils zeigt die DE-C-35 32 123. Die Außenflächen des Libellenhalters sind zu diesem Zweck mit Noppen, Rippen oder dergleichen versehen, die ein Übermaß im Verhältnis zu den Innenmaßen des Hohlprofils besitzen. Dadurch wird der Libellenhalter im Hohlprofil verklemmt.

Eine weitere Konstruktion eines Libellenhalters zeigt die DE-C-36 06 774. Bei dieser Konstruktion wird der Libellenhalter aus Kunststoff mit Hilfe von zwei nachträglich eingesetzten Spreizkeilen gespreizt, wobei sich der Kunststoff in schneidenartige Rippen an der Innenseite des Hohlprofils eindrückt.

Bei den beiden letztgenannten Konstruktionen kann die Klemmkraft der Kunststoffteile die Hohlprofile verformen. Dies gilt insbesondere für dünnwandige Hohlprofile.

Es ist erwiesen und allgemein bekannt, daß federnde Kunststoffelemente, die mit einer zu hohen Spannung beaufschlagt werden, mit der Zeit erlahmen. Die Folge davon ist, daß die Libellenbefestigung sich lockern kann. Andere Konstruktionen mit Schraubverbindungen, Vernietungen, Verstiftungen usw. sind mit einem beträchtlichen Aufwand verbunden

Der vorliegenden Erfindung liegt die Aufgabe zugrunde, eine Wasserwaage der eingangs genannten Art anzugeben, die die schnelle, automatengerechte Montage und Justage der Libellen, d. h. sowohl der Horizontal-Libellen als auch der Vertikal-Libellen, sowie einen dauerhaften, sicheren Sitz der Libellen ermöglicht.

Diese Aufgabe wird gelöst durch eine Wasserwaage mit den Merkmalen des Anspruchs 1.

Die Erfindung beruht darauf, daß es immer wenigstens eine Säule gibt, die den Libellenhalter in gestreckter Lage im Hohlprofil verkeilt, und daß die gestreckte Säule nicht auf Biegung, sondern auf Knickung beansprucht wird. Sichergestellt wird dies durch eine entsprechend flache Keilform der Oberseite des Säulenblocks. Die Knickfestigkeit ist wesentlich höher als die Biegefestigkeit. Durch die hohe Knickfestigkeit kann die Libellenbefestigung hohe Kräfte aufnehmen. Mangels Durchbiegung erlahmt die Haltekraft dieser Säule auch nach längerer Zeit nicht.

Die höheren, stärker umgebogenen Säulen drücken die Auflagesohle des Libellenhalters während der Montage und Justage fest gegen das Hohlprofil und gewährleisten so eine eindeutig definierte, stabile Lage, was Bedingung für eine sichere und präzise Justierung der Libelle ist. Bei richtiger Dimensionierung bleiben die Kräfte so gering, daß das Hohlprofil nicht verspannt wird.

Dank der vorliegenden Erfindung können die Vorteile, die mit der Massenproduktion von Libellenhaltern aus Kunststoff und der einfachen Montage von federnden Elementen verbunden sind, ausgenützt werden, ohne die Nachteile der bekannten Kunststoffkonstruktionen, insbesondere das Erlahmen der Federkraft, übernehmen zu müssen. Dank der relativ geringen Federkräfte können auch dünnwandige Hohlprofile ohne Probleme eingesetzt werden.

Die Toleranzbereiche der üblichen Hohlprofile zur Herstellung von Wasserwaagen werden problemlos überbrückt. Es können durchaus Hohlprofile mit größeren Innentoleranzen verwendet werden.

Vorzugsweise sind die Säulen nicht mit kreisförmigem oder quadratischem, sondern als Lamellen mit rechteckigem Querschnitt ausgebildet.

Gemäß einer vorteilhaften Weiterbildung der Erfindung sind wenigstens zwei parallele Säulenblöcke vorgesehen, die gegenseitig beabstandet sind.

Vorzugsweise stehen die Säulen des einen Säulenblocks auf Lücke zu den Säulen des anderen Säulenblocks. Dies vereinfacht die spritztechnische Herstellung.

Vorteilhafterweise stützen sich die Auflagesohle bzw. die Säulen an den Schmalseiten und/oder den Breitseiten des Hohlprofils ab, und zwar bevorzugt an den steifen Profilblechen.

Montagehilfen, beispielsweise in Form von keilförmig ausgebildeten Führungslamellen, ermöglichen eine schnelle Montage und verhindern eine Beschädigung der Säulen beim Einschieben des Libellenhalters in das Hohlprofil.

Gemäß einer vorteilhaften Weiterbildung ist eine Libellenaufnahme vorgesehen. Diese sitzt zwischen Libellenhalter und Libellenkörper und hat den Zweck, eine sofortige und unverrückbare Fixierung der justierten Libelle mittels Ultraschallverschweißung zu ermöglichen.

Um die Ultraschallverschweißung zu erleichtern, können Libellenhalter und/oder Libellenaufnahme an der Schweißstelle eine Verzahnung erhalten.

Oft wird eine zusätzliche Fixierung des Libellenhalters im Hohlprofil gewünscht.

Gemäß einer ersten Möglichkeit können Libellenaufnahme und/oder Deckel so ausgebildet sein, daß sie den Libellenhalter formschlüssig im Sichtfenster fixieren.

Des weiteren besteht die Möglichkeit, die Säulen eines Blocks zu einem kompakten Paket zusammenzuschweißen.

Schließlich kann zwischen Libellenhalter und Hohlprofil eine Vergußmasse oder ein Kleber eingespritzt werden. Da der Libellenhalter bereits durch die Säulen und die Libellenaufnahme mit der Libelle durch eine Ultraschall-Verschweißung fixiert sind, müssen für das Aushärten von Vergußmasse oder Kleber keine besonderen Vorsichtsmaßnahmen gegen Verstellung der Libellen ergriffen werden.

Gemäß einer vorteilhaften Weiterbildung der Erfindung besteht der Libellenhalter aus zwei Teilen, die sich durch das Sichtfenster in das Hohlprofil einsetzen lassen. Jedes Teil besitzt wenigstens einen Säulenblock und eine Auflagesohle. Beide Teile sind im Hohlprofil in ihre Endposition verschiebbar. Dies ist besonders geeignet für die Montage von Horizontal-Libellen in langen Wasserwaagen-Hohlprofilen und vermeidet das Einschieben des Libellenhalters von der offenen Stirnseite des Hohlprofils her.

Vorzugsweise sind beide Teile des Libellenhalters identisch.

Vorzugsweise besitzt jedes Teil eine angeformte Spreizschräge, passend zu einem Spreizwerkzeug mit einem Spreizelement, z. B. einem Spreizkeil.

Dieser Spreizkeil kann beispielsweise Teil des Libellenkörpers bzw. der Libellenaufnahme selbst sein.

Anhand der Zeichnung soll die Erfindung in Form von Ausführungsbeispielen näher erläutert werden. Es zeigen:
- Fig. 1: ausschnittsweise einen Längsschnitt durch eine Wasserwaage mit teilmontierter Vertikal-Libelle,
- Fig. 2: einen Querschnitt durch die Wasserwaage der Fig. 1 entlang der Linie II-II,
- Fig. 3: eine Draufsicht auf die Oberseite des Libellenhalters der Fig. 1 und 2,
- Fig. 4: ausschnittsweise einen Längsschnitt durch eine Wasserwaage mit montierter Horizontal-Libelle,
- Fig. 5: eine Draufsicht auf die Oberseite des Libellenhalters für die Montage einer Horizontal-Libelle gemäß Fig. 4,
- Fig. 6: einen zweiteiligen Libellenhalter für die Montage einer Horizontal-Libelle vor dem Montieren in einer Wasserwaage,
- Fig. 7: ausschnittsweise einen Längsschnitt durch die Wasserwaage der Fig. 6 nach Montage des zweiteiligen Libellenhalters und
- Fig. 8: ausschnittsweise einen Lamellenblock nach der Montage im Hohlprofil.

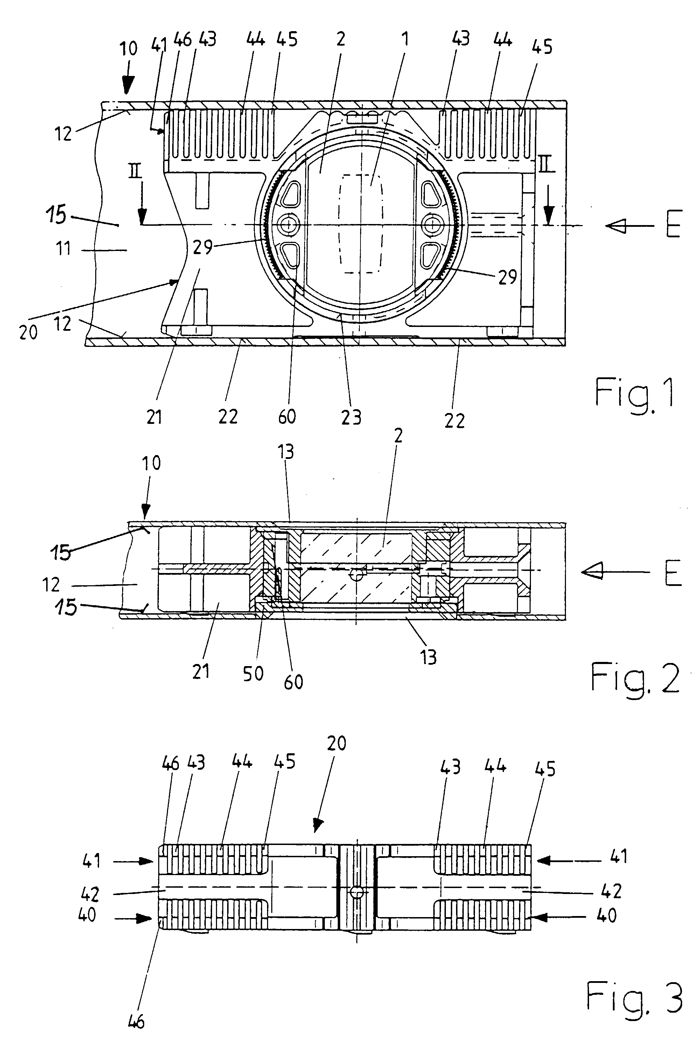

Die Fig. 1 bis 3 zeigen in drei verschiedenen Schnitten und Ansichten eine Wasserwaage 10 und einen Libellenhalter 20 für Vertikal-Libellen. Der Libellenhalter 20 ist ein Kunststoff-Spritzgußteil mit einem Körper 21 mit kreisförmiger Öffnung, die einen Sitz 23 für einen Libellenkörper 2 mit Libelle 1 bildet. An der Unterseite erkennt man zwei stabile Auflagesohlen 22. Diesen gegenüber befinden sich je zwei parallele Lamellenblöcke 40, 41, gegenseitig beabstandet mittels Trennspalt 42. Diese besitzen eine Vielzahl von quer zur Einschubrichtung E orientierten Lamellen 43, 44, 45 mit rechteckigem Querschnitt und abgestufter Höhe, so daß die Oberseite in Einschubrichtung E leicht keilförmig ansteigt. Vor den Lamellen 43, 44, 45 befindet sich eine Montagehilfe 46, die die Lamellen 43, 44, 45 bei der Montage schützt.

Die Fig. 1 und 2 zeigen, wie mit Hilfe des Libellenhalters 20 und der Libellenaufnahme 60 der Libellenkörper 2 mit Libelle 1 im Hohlprofil 11 der Wasserwaage 10 montiert wird. Der Libellenhalter 20 steht mit seinen Auflagesohlen 22 auf einer Schmalseite 12 des Hohlprofils 11. Die Lamellenblöcke 40, 41 verklemmen den Libellenhalter 20 gegen die gegenüberliegende Schmalseite 12 des Hohlprofils 11. Da sich die Lamellen 43, 44, 45 jedem in Frage kommenden Hohlprofil 11 anpassen können, führt dies zu einer äußerst stabilen und dauerhaften Fixierung, auch bei Verwendung von Hohlprofilen 11 mit großen Toleranzen und kleiner Wandstärke. Die Lamellen 43, 44, 45 sind so abgestuft, daß sie wenigstens den gesamten Toleranzbereich der Innenhöhe des Hohlprofils 11 abdecken.

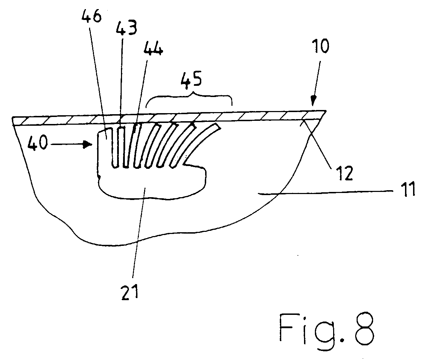

Einzelne Lamellen 43, 44, 45 jedes Lamellenblocks 40, 41 werden je nach der Innenhöhe des Hohlprofils 11 nicht, wenig oder stärker umgebogen. Dies ist in Fig. 8 dargestellt. Lamellen 45, die bei der Montage federnd umgebogen werden, erzeugen eine Kraft, die die Auflagesohlen 22 fest auf die Schmalkante 12 des Hohlprofils 11 drückt, wodurch der Libellenhalter 20 eine eindeutig definierte und stabile Lage erhält. Damit ist die erste Bedingung für eine sichere und automatisierte Justierung der Libelle 1 erfüllt.

Je weiter sich eine der Lamellen 45 umbiegt, desto größer wird im allgemeinen die Federkraft, welche die Auflagesohle 22 auf das Hohlprofil 11 drückt. Dieser Effekt ist für die Montage von Vorteil, jedenfalls solange die Kräfte so klein bleiben, daß das Hohlprofil 11 nicht verspannt wird. Die Dauerfestigkeit dieser langen Lamellen 45 ist jedoch unbefriedigend, da die Federwirkung im Laufe der Zeit durch Spannungsabbau im Kunststoff erheblich abnimmt.

Der sichere, dauerhafte Halt des Libellenhalters 20 wird dadurch gewährleistet, daß pro Lamellenblock 40, 41 jeweils wenigstens eine Lamelle 44 gestreckt im Hohlprofil 11 steht. Diese gestreckt stehende Lamelle 44 ist auf Knickung beansprucht und kann daher dauerhaft auch große Kräfte aufnehmen, welche bei der Justierung der Libelle 1 und insbesondere beim Gebrauch der Wasserwaage 10 entstehen können. Die Knickfestigkeit ist wesentlicher höher als die Biegefestigkeit.

Versuche haben gezeigt, daß mit dieser Anordnung und bei angepaßter Längenabstufung der Lamellen 43, 44, 45 ein dauerhafter Halt des Libellenhalters 20 im Hohlprofil 11 auch ohne Vergußmassen, Klebstoffe usw. möglich ist.

Es versteht sich, daß die Lamellenblöcke den Libellenhalter 20 auch zwischen den Breitseiten 15 des Hohlprofils 11 verspannen können.

Wie die Fig. 1 und 2 zeigen, werden der Rand des Sichtfensters 13 im Hohlprofil 11, der Rand des Libellenkörpers 2 und die sichtbaren Teile des Libellenhalters 20 und der Libellenaufnahme 60 mit Hilfe eines Deckels 50 optisch abgedeckt. Dieser Deckel 50 kann mit Libellenhalter 20, Libellenaufnahme 60 und/oder Libellenkörper 2 verrastet, verklemmt, verklebt und/oder verschweißt werden, insbesondere mittels Ultraschall.

Zur Verbesserung der Ultraschallschweißung können an Libellenhalter 20 und/oder Libellenaufnahme 60 Verzahnungen 29 angeformt sein.

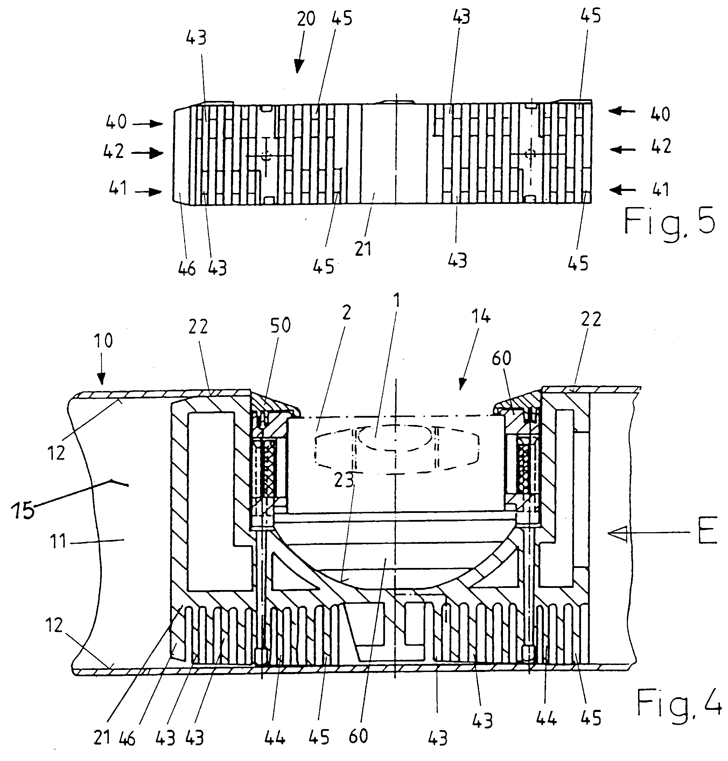

Die Fig. 4 und 5 zeigen als zweites Ausführungsbeispiel einen Libellenhalter 20 für eine Horizontal-Libelle. Der Libellenhalter 20 besitzt gegenüber seinen zwei Auflagesohlen 22 je zwei Lamellenblöcke 40, 41. Dabei stehen die Lamellen des einen Lamellenblocks 40, 41 auf Lücke zu den Lamellen des anderen Lamellenblocks 40, 41, was die spritztechnische Herstellung erleichtert.

Der Libellenhalter 20 wird auch in diesem Fall von der offenen Stirnseite des Hohlprofils 11 eingeschoben, bis er richtig zum Sichtfenster 14 positioniert ist. Um die Libelle 1 justieren zu können, besitzt der Libellenhalter 20 einen kreisbogenförmigen Sitz 23 für den entsprechend ausgebildeten Boden der Libellenaufnahme 60.

Sollte der Wunsch bestehen, Vergußmassen oder Klebstoffe zu verwenden, so ist auch dies möglich. Geeignete Klebestellen sind die Zwischenräume innerhalb der Lamellenblöcke 40, 41, die Zwischenräume zwischen den Lamellenblöcken 40, 41 und dem Hohlprofil 11, die Zwischenräume zwischen Libellenhalter 20 und Hohlprofil 11, sowie die Spalte zwischen dem Libellenhalter 20, der Libellenaufnahme 60, dem Libellenkörper 2 und dem Deckel 50.

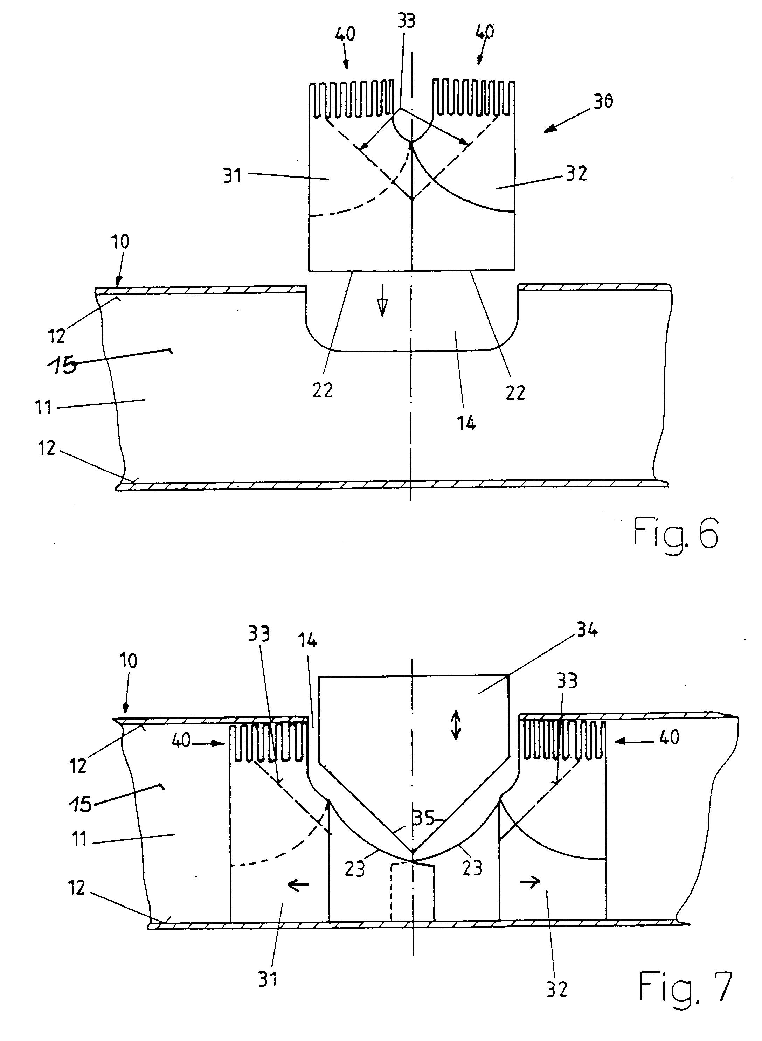

Die Fig. 6 und 7 zeigen als drittes Ausführungsbeispiel einen Libellenhalter 30 für eine Horizontal-Libelle. Der Libellenhalter 30 besteht aus zwei Teilen 31, 32 mit je einer Auflagesohle 22 und jeweils wenigstens einem Lamellenblock 40. Die beiden Libellenhalterteile 31, 32 sind vorzugsweise identisch; auf jeden Fall sind sie so ausgebildet, daß sie durch das Sichtfenster 14 im Hohlprofil 11 gleichzeitig oder auch nacheinander eingesetzt werden können.

Mit Hilfe eines geeigneten Spreizwerkzeugs 34 werden die beiden Teile 31, 32 anschließend nach rechts und links in das Hohlprofil 11 geschoben, bis sie ihre Endposition erreicht haben. Zu diesem Zweck besitzen sie eine Spreizschräge 33, das Spreizwerkzeug 34 einen entsprechenden Spreizkeil 35. Es besteht sogar die Möglichkeit, den Libellenkörper 2 bzw. die Libellenaufnahme 60 selbst als Spreizwerkzeug 34 zu verwenden, wenn der Boden keilförmig ist.

Nach der Montage können die beiden Libellenhalterteile 31, 32 durch Schweißen oder Kleben miteinander und gegebenenfalls mit der Libellenaufnahme 60 verbunden werden.

Da die Lamellen der Lamellenblöcke 40 der beiden Libellenhalterteile 31, 32 jetzt in entgegengesetzte Richtungen gebogen werden, verspannen sich die beiden Teile 31, 32 gegenseitig, wodurch ein extrem hoher Widerstand gegen gewaltsame Verschiebungen infolge von Stößen oder Stürzen erreicht wird.

Zweiteilige Libellenhalter 30 ermöglichen eine besonders einfache Montage von Horizontal-Libellen in Hohlprofilen 11 von sehr langen Wasserwaagen 10.

## Patentansprüche

1. Wasserwaage (10) mit einem geschlossenen, toleranzbehafteten Hohlprofil (11), welches ein den Blick auf eine Libelle (1) freigebendes Fenster (13) besitzt, und einem Libellenhalter (20, 30) aus Kunststoff zum Einklemmen in das Hohlprofil (11), umfassend
- einen Sitz (23) für die justierbare Aufnahme des Libellenkörpers (2),
- eine Fixiereinrichtung zur dauerhaften Fixierung des justierten Libellenkörpers (2)
- und eine Klemmeinrichtung zur dauerhaften Klemmbefestigung des Libellenhalters (20) im Hohlprofil (11),
gekennzeichnet durch die Merkmale:
- der Libellenhalter (20, 30) besitzt
-- mindestens eine Auflagesohle (22) und
-- der Auflagesohle (22) gegenüber wenigstens einen Säulenblock (40, 41) mit einer Vielzahl elastischer, biegesteifer Säulen (43, 44, 45),
- die Säulen (43 ... 45) stehen quer zur Einschubrichtung (E) und sind in der Höhe derart abgestuft, daß die Oberseite (47) des Säulenblocks (40, 41) in Einschubrichtung (E) leicht keilförmig ansteigt,
- wenigstens eine auf Knickung beanspruchte Säule (44) verspannt den Libellenhalter (20) im Hohlprofil (11).

2. Wasserwaage nach Anspruch 1, gekennzeichnet durch das Merkmal:
- die Säulen (43, 44, 45) sind als Lamellen mit rechteckigem Querschnitt ausgebildet.

3. Wasserwaage nach Anspruch 1 oder 2, gekennzeichnet durch das Merkmal:
- es sind zwei parallele Säulenblöcke (40, 41) vorgesehen.

4. Wasserwaage nach Anspruch 3, gekennzeichnet durch das Merkmal:
- die Säulen des einen Säulenblocks (40) stehen auf Lücke zu den Säulen des anderen Säulenblocks (41).

5. Wasserwaage nach einem der Ansprüche 1 bis 4, gekennzeichnet durch das Merkmal:
- die Auflagesohle (22) bzw. die Säulen (44, 45) stützen sich an den Schmalseiten (12) und/oder den Breitseiten (15) des Hohlprofils (11) ab, bevorzugt an den steifen Profilecken.

6. Wasserwaage nach einem der Ansprüche 1 bis 5, gekennzeichnet durch das Merkmal:
- am Libellenhalter (20, 30) sind in Einschubrichtung (E) vorne Montagehilfen (46) angeformt,
-- die das Einführen in das Hohlprofil (11) erleichtern
-- und eine Beschädigung der Lamellen (43 ... 45) verhindern.

7. Wasserwaage nach einem der Ansprüche 1 bis 6, gekennzeichnet durch das Merkmal:
- zwischen Libellenhalter (20, 30) und Libellenkörper (2) ist eine Libellenaufnahme (60) vorgesehen,
- Libellenhalter (20, 30) oder Libellenaufnahme (60) besitzen an der Schweißstelle eine feine Verzahnung (29).

8. Wasserwaage nach einem der Ansprüche 1 bis 7, gekennzeichnet durch das Merkmal:
- die Libellenaufnahme (60) und/oder ein Deckel (50) fixieren den Libellenhalter (20) formschlüssig im Sichtfenster (13, 14).

9. Wasserwaage nach einem der Ansprüche 1 bis 8, gekennzeichnet durch das Merkmal:
- die Lamellen eines Lamellenblocks (40, 41) sind zu einem Paket verschweißt.

10. Wasserwaage nach einem der Ansprüche 1 bis 9, gekennzeichnet durch das Merkmal:
- eine Vergußmasse füllt alle Zwischenräume zwischen den Säulen (43, 44, 45) aus und befestigt den Libellenhalter (20, 30) zusätzlich im Hohlprofil (11).

11. Wasserwaage nach einem der Ansprüche 1 bis 10, gekennzeichnet durch die Merkmale:
- der Libellenhalter (30) besteht aus zwei Teilen (31, 32),
- beide Teile (31, 32) lassen sich durch das Sichtfenster (14) in das Hohlprofil (11) einsetzen,
- jedes Teil (31, 32) besitzt mindestens eine Auflagesohle (22) und wenigstens einen Säulenblock (40),
- beide Teile (31, 32) sind im Hohlprofil (11) in ihre Endpositionen verschiebbar.

12. Wasserwaage nach Anspruch 11, gekennzeichnet durch das Merkmal:
- beide Teile (31, 32) sind identisch.

13. Wasserwaage nach Anspruch 11 oder 12, gekennzeichnet durch das Merkmal:
- jedes Teil (31, 32) besitzt eine angeformte Spreizschräge (33),
- passend zu einem Spreizwerkzeug (34) mit einem Spreizelement, z. B. einem Spreizkeil (35).

14. Wasserwaage nach Anspruch 13, gekennzeichnet durch das Merkmal:
- der Spreizkeil (35) ist Teil des Libellenkörpers (2) oder der Libellenaufnahme (60).

## Claims

1. A level indicator (10) with a closed hollow profile (11) which is affected by tolerances and which has a window (13) providing a view of a spirit level (1), and with a spirit level holder (20,30) of plastics material to be clamped in the hollow profile (11), comprising
- a seating (23) for adjustably receiving the spirit level body (2),
- a securing means for the permanent securing of the adjusted spirit level body (2)
- and a clamping device for the permanent clamp fastening of the spirit level holder (20) in the hollow profile (11),
characterised by the features:
- the spirit level holder (20,30) has
-- at least one support base (22) and
-- opposite the support base (22) at least one column block (40,41) with a plurality of elastic, rigid columns (43,44,45),
- the columns (43 ... 45) are disposed transversely to the insertion direction (E) and are stepped vertically so that the upper side (47) of the column block (40,41) ascends slightly wedge-like in the insertion direction (E),
- at least one column (44) subject to buckling load braces the spirit level holder (20) in the hollow profile (11).

2. A level indicator according to Claim 1, characterised by the feature:
- the columns (43,44,45) are in the form of lamellae of rectangular cross-section.

3. A level indicator according to Claim 1 or 2, characterised by the feature:
- two parallel column blocks (40,41) are provided.

4. A level indicator according to Claim 3, characterised by the feature:
- the columns of one column block (40) are disposed on spacings in the columns of the other column block (41).

5. A level indicator according to any one of Claims 1 to 4, characterised by the feature:
- the support base (22) and the columns (44,45) are supported on the narrow sides (12) and/or the wide sides (15) of the hollow profile (11), preferably on the rigid profile corners.

6. A level indicator according to any one of Claims 1 to 5, characterised by the feature:
- mounting aids (46) are formed on the spirit level holder (20,30) at the front in the insertion direction (E),
-- which mounting aids facilitate insertion into the hollow profile (11)
-- and prevent damage to the lamellae (43 ... 45).

7. A level indicator according to any one of Claims 1 to 6, characterised by the feature:
- a spirit level mounting (60) is provided between the spirit level holder (20,30) and the spirit level body (2),
- the spirit level holder (20,30) or the spirit level mounting (60) has fine toothing (29) at the welding location.

8. A level indicator according to any one of Claims 1 to 7, characterised by the feature:
- the spirit level mounting (60) and/or a cover (50) secure the spirit level holder (20,30) in form-locking manner in the viewing window (13,14).

9. A level indicator according to any one of Claims 1 to 8, characterised by the feature:
- the lamellae of one lamellae block (41,41) are welded to form a stack.

10. A level indicator according to any one of Claims 1 to 9, characterised by the feature:
- a sealing compound fills all the spaces between the columns (43,44,45) and additionally fastens the spirit level holder (20,30) in the hollow profile (11).

11. A level indicator according to any one of Claims 1 to 10, characterised by the features:
- the spirit level holder (30) comprises two parts (31,32),
- both parts (31,32) can be inserted into the hollow profile (11) through the viewing window (14),
- each part (31,32) has at least one support base (22) and at least one column block (40),
- both parts (31,32) can be slid into their final positions in the hollow profile (11).

12. A level indicator according to Claim 11, characterised by the feature:
- both parts (31,32) are identical.

13. A level indicator according to Claim 11 or 12, characterised by the feature:
- each part (31,32) has an expanding slope (33) formed thereon,
- to fit an expanding tool (34) with an expanding element, for example an expanding wedge (35).

14. A level indicator according to Claim 13, characterised by the feature:
- the expanding wedge (35) is part of the spirit level body (2) or the spirit level mounting (60).

## Revendications

1. Niveau à bulle d'eau (10) comportant un profilé creux (11) fermé, avec tolérance, ayant une fenêtre qui donne la vue sur une nivelle (1), et un porte-nivelle (20, 30) en plastique pour le serrage dans le profilé creux (11), comprenant un siège (23) pour le logement ajustable du corps de nivelle (2), un système de fixation permanente du corps de nivelle (2) ajusté, et un système de serrage pour la fixation permanente par serrage du porte-nivelle (20) dans le profilé creux (11), caractérisé en ce que le porte-nivelle (20, 30) présente au moins une base de support (22) et en face de la base de support, au moins un bloc à colonnes (40, 41) avec un grand nombre de colonnes (43, 44, 45) élastiques et résistantes à la flexion, les colonnes (43...45) étant disposées transversalement par rapport au sens d'introduction (E) et échelonnées en hauteur de telle façon que la face supérieure (47) du bloc à colonnes (40, 41) monte légèrement en forme de clavette dans le sens d'introduction (E), au moins une colonne (44) sollicitée au niveau du fléchissement maintenant le porte-nivelle (20) dans le profilé creux (11).

2. Niveau à bulle d'air selon la revendication 1, caractérisé en ce que les colonnes (43, 44, 45) sont réalisées sous la forme de lamelles avec une section rectangulaire.

3. Niveau à bulle d'air selon la revendication 1 ou 2, caractérisé en ce qu' il est prévu deux blocs à colonnes (40, 41) parallèles.

4. Niveau à bulle d'air selon la revendication 3, caractérisé en ce que les colonnes d'un bloc à colonnes (40) sont disposées en quinconce par rapport aux colonnes de l'autre bloc à colonnes(41).

5. Niveau à bulle d'air selon l'une quelconque des revendications 1 à 4, caractérisé en ce que la base de support (22) et les colonnes (44, 45) s'appuient sur les petits côtés (12) et/ou les grands côtés (15) du profilé creux (11), de préférence sur les angles rigides du profilé.

6. Niveau à bulle d'air selon l'une quelconque des revendications 1 à 5, caractérisé en ce que, sur le porte-nivelle (20, 30), des aides au montage (46) sont formées à l'avant dans le sens d'introduction (E), qui facilitent l'introduction dans le profilé creux (11) et empêchent une détérioration des lamelles (43...45).

7. Niveau à bulle d'air selon l'une quelconque des revendications 1 à 6, caractérisé en ce qu'un logement de nivelle (60) est prévu entre le porte-nivelle (20, 30) et le corps de nivelle (2), et le porte-nivelle (20, 30) ou le logement de nivelle (60) présente au point de soudure une fine denture (29).

8. Niveau à bulle d'air selon l'une quelconque des revendications 1 à 7, caractérisé en ce que le logement de nivelle (60) et/ou un couvercle (50) fixent le porte-nivelle (20) de façon mécanique dans la fenêtre de visibilité (13, 14).

9. Niveau à bulle d'air selon l'une quelconque des revendications 1 à 8, caractérisé en ce que les lamelles d'un bloc à lamelles (40, 41) sont soudées pour former un paquet.

10. Niveau à bulle d'air selon l'une quelconque des revendications 1 à 9, caractérisé en ce qu'une masse de scellement remplit tous les interstices entre les colonnes (43, 44, 45) et fixe en outre le porte-nivelle (20, 30) dans le profilé creux (11).

11. Niveau à bulle d'air selon l'une quelconque des revendications 1 à 10, caractérisé en ce que le porte-nivelle (30) comprend deux parties (31, 32), qui peuvent être insérées par la fenêtre de visibilité (14) dans le profilé creux (11), chaque partie (31, 32) présentant au moins une base de support (22) et au moins un bloc à colonnes (40), et les deux parties (31, 32) pouvant coulisser dans le profilé creux (11) dans leur position finale.

12. Niveau à bulle d'air selon la revendication 11, caractérisé en ce que les deux parties (31, 32) sont identiques.

13. Niveau à bulle d'air selon la revendication 11 ou 12, caractérisé en ce que chaque partie (31, 32) présente un chanfrein d'écartement (33) formé, adapté à un outil d'écartement (34) avec un élément d'écartement, par exemple une clavette d'écartement (35).

14. Niveau à bulle d'air selon la revendication 13, caractérisé en ce que la clavette d'écartement (35) fait partie du corps de nivelle (2) ou du logement de nivelle (60).
